# EUROPÄISCHE PATENTSCHRIFT

(11) **EP 2 758 255 B1**
(45) Veröffentlichungstag und Bekanntmachung des Hinweises auf die Patenterteilung: **07.10.2015**
(21) Anmeldenummer: 12746337.0
(22) Anmeldetag: 13.08.2012
(51) Int. Cl.: B60B 39/12

(54) **GLEITSCHUTZVORRICHTUNG FÜR FAHRZEUGE**
ANTISKID DEVICE FOR VEHICLES
SYSTÈME ANTIDÉRAPAGE POUR VÉHICULES

(30) Priorität: 21.09.2011 DE 102011083092
(43) Veröffentlichungstag der Anmeldung: 30.07.2014
(73) Patentinhaber: Singula, Erich, 84051 Altheim (DE)
(72) Erfinder: Singula, Erich, 84051 Altheim (DE)
(74) Vertreter: Hofstetter, Schurack & Partner
(86) Internationale Anmeldenummer: PCT/EP2012/065801
(87) Internationale Veröffentlichungsnummer: WO 2013/041304

(56) Entgegenhaltungen:
- EP-A1- 0 370 106
- US-A1- 2011 011 688

## Beschreibung

Die vorliegende Erfindung betrifft eine Gleitschutzvorrichtung für ein Fahrzeug mit einer Trägereinrichtung und mehreren Formteilen, die von der Trägereinrichtung entlang einer Fahrtrichtung führbar sind. Die Trägereinrichtung weist einen umlaufenden Riemen oder eine umlaufende Kette auf, an dem/der die Formteile befestigt sind (unter einem "Riemen" wird hier auch ein Seil oder dergleichen verstanden). Außerdem weist die Trägereinrichtung zwei Umlenkelemente auf, an denen der Riemen oder die Kette umgelenkt werden. Die Trägereinrichtung ist an dem Fahrzeug so befestigbar, dass beim Fahren des Fahrzeugs die Formteile zwischen ein Rad des Fahrzeugs und einen Fahrzeuguntergrund gezogen werden.

Bei schneeglatten oder eisglatten Fahrbahnen ist die Reibung zwischen den Rädern eines Fahrzeugs und dem Fahrzeuguntergrund bzw. der Fahrbahn oft nicht ausreichend. In derartigen Fällen bedient man sich einer Gleitschutzvorrichtung, einer Anfahrhilfe oder einer Freifahrhilfe für Fahrzeuge. Hierzu sind vor allem Systeme bekannt, die an einem Rad des Fahrzeugs angebracht werden und der Drehbewegung des Rads folgen. Derartige Systeme wie insbesondere Schneeketten sind besonders bei Lastkraftwagen umständlich anzubringen. Trotzdem sind derartige Systeme weit verbreitet, da sie eine deutliche Traktionsverbesserung gewährleisten. Außerdem sind Greifersysteme bekannt, die zwar leichter zu montieren sind, die aber nur einen geringen Teil der Lauffläche des Reifens bedecken und dadurch eine geringere Traktionsverbesserung aufweisen. Ferner sind textile Systeme (so genannte "snow socks") bekannt, die allerdings bei Eis kaum zu einer erhöhten Haftung beitragen. Fest installierte Systeme wie Schleuderketten oder ausfahrbare Spikes haben einen hohen Montage- und Kostenaufwand. Andere Freifahrhilfen wie Sandbleche oder Traktionsmatten sind nur für kurze Strecken geeignet, da sie von Hand weiterbewegt werden müssen. Konkret ist aus der Druckschrift DE 103 40 117 A1 eine Gleitschutzvorrichtung für Kraftfahrzeuge bekannt, die Kettenschlaufen aufweist, welche an einem um zwei Riemenscheiben umlaufenden Keilriemen angebracht sind. Die Kettenschlaufen werden unter das Rad geschleudert. Die Vorrichtung wird schräg unter dem Fahrzeug eingebaut.

Darüber hinaus beschreibt die Druckschrift DE 38 74 348 T2 eine Antriebsvorrichtung für Räder. Die Antriebsvorrichtung weist eine Mehrzahl von Lappen auf, welche bei Gebrauch aufeinanderfolgend zwischen den Rädern und einer Straßenoberfläche angeordnet sind, um ein Rutschen der Räder auf der Oberfläche zu verhindern. Die Lappen sind an einer um zwei Kettenräder umlaufenden Kette befestigt. Die Antriebsvorrichtung wird ebenfalls unter dem Fahrzeug schräg eingebaut.

Ferner offenbart die Druckschrift DE 28 20 016 A1 eine Gleitschutzeinrichtung mit ineinandergreifenden Formteilen. Die Formteile sind über Tragarme an einem um zwei Riemenscheiben umlaufenden Keilriemen angebracht. Auch hier wird die Gleitschutzreinrichtung schräg unter dem Fahrzeug eingebaut.

Aus der japanischen Druckschrift JP 05213021 A ist ebenfalls eine schräg unter dem Fahrzeug eingebaute Gleitschutzvorrichtung bekannt. Sie weist flexible Lappen auf, die an einer um zwei Kettenräder umlaufenden Kette befestigt sind und unter das Rad geführt werden.

Die amerikanische Druckschrift US 2011/0011688 A1 beschreibt ebenfalls eine Traktionshilfe für Fahrzeuge. Auch sie weist flexible Lappen auf, die an einer um zwei Kettenräder umlaufenden Kette befestigt sind und unter das Rad geführt werden. In doppelter Ausführung innen und außen werden die flexiblen Lappen gleichzeitig unter das Rad geführt. Die Befestigung des Systems erfolgt wiederum schrägt unten am Fahrzeug.

Nachteilig an derartigen Systemen ist, dass sie im Betrieb bei schneebedeckter Fahrbahn aufgrund ihres Mechanismus zusätzlich Schnee auf die Fahrbahn befördern. Die einzelnen Glieder der Gleitschutzvorrichtungen bewegen sich nämlich kurz bevor sie unter das Rad geführt werden, von der Seite in die Fahrbahn. Dabei befördern sie zusätzlich Schnee auf die Fahrbahn. Außerdem können in die offen liegenden Führungen Schmutz und dergleichen eingetragen werden, was zu erhöhtem Verschleiß führt. Dies ist für den Einsatz der Gleitschutzvorrichtungen äußerst nachteilig, sodass derartige Gleitschutzvorrichtungen bei schneebedeckter Fahrbahn vielfach nicht einsatzfähig sind.

Die Aufgabe der vorliegenden Erfindung besteht somit darin, eine Gleitschutzvorrichtung bereitzustellen, die insbesondere auch bei schneebedeckter Fahrbahn eine hohe Wirksamkeit besitzt.

Erfindungsgemäß wird diese Aufgabe gelöst durch eine Gleitschutzvorrichtung für ein Fahrzeug mit einer Trägereinrichtung und mehreren Formteilen, die von der Trägereinrichtung entlang einer Fahrtrichtung führbar sind, wobei die Trägereinrichtung einen umlaufenden Riemen oder eine umlaufende Kette aufweist, an dem/der die Formteile befestigt sind, wobei die Trägereinrichtung zwei Umlenkelemente aufweist, an denen der Riemen oder die Kette umgelenkt werden, und wobei die Trägereinrichtung an dem Fahrzeug so befestigbar ist, dass beim Fahren des Fahrzeugs die Formteile zwischen ein Rad des Fahrzeugs und einen Fahrzeuguntergrund gezogen werden, wobei an der Trägereinrichtung ein Gehäuse befestigt ist, das einen in Fahrtrichtung vorne befindlichen Abschnitt der Trägereinrichtung einschließlich der dort befindlichen Formteile schützt.

In vorteilhafter Weise ist demnach an der Trägereinrichtung ein Gehäuse befestigt, welches die Formteile an der Trägereinrichtung schützt, wenn sie die Bewegung in die Fahrbahn unter das Rad des Fahrzeugs vollführen. Dadurch können sie nicht Schnee von außerhalb der Fahrbahn in die Fahrbahn fördern. Dadurch erhöht sich die Wirksamkeit der Gleitschutzvorrichtung deutlich.

In einer Ausführungsform weist die Trägereinrichtung der erfindungsgemäßen Gleitschutzvorrichtung einen umlaufenden Riemen oder eine umlaufende Kette auf, an dem/der die Formteile befestigt sind. Alternativ können die Formteile auch unmittelbar miteinander zu einer endlosen Kette verbunden sein. In letzterem Fall erfüllen die Formteile nicht nur Kettengliedfunktion, sondern auch Gleitschutzfunktion.

Vorzugsweise sind die Formteile auf mindestens der Hälfte des Weges bei ihrem Umlauf um die Umlenkelemente in dem Gehäuse geführt. Dies bedeutet, dass sie nicht nur bei ihrem Umlauf in Fahrtrichtung vorne, sondern im Wesentlichen auch bei ihrem Weg nach vorne neben dem Rad des Fahrzeugs durch das Gehäuse geschützt sind. Auch dadurch nehmen sie weniger Schnee oder andere lose Partikel auf.

Darüber hinaus ist es von Vorteil, wenn das Gehäuse in Fahrtrichtung vorne einen Gleitabschnitt zum Gleiten über den Fahrzeuguntergrund aufweist. Dabei ist es vor allem günstig wenn der Gleitabschnitt eine Stromlinienform annimmt, sodass er auch bei höherem Schnee wenig Widerstand bietet.

Das Gehäuse kann auch an seiner Unterseite Rollen oder Kufen aufweisen. Auch diese ermöglichen ein nahezu widerstandsloses Ziehen der Gleitschutzvorrichtung über den Fahrzeuguntergrund. Die Gleitschutzvorrichtung rollt oder gleitet damit auf dem Fahrzeuguntergrund und muss somit nicht durch ein anderes System vertikal gehalten werden.

Des Weiteren ist es vorteilhaft, wenn das Gehäuse breiter als die Trägereinrichtung einschließlich der daran befestigten Formteile ist. Die Breite bezieht sich hier auf eine Richtung zur Fahrtrichtung, und das Gehäuse schützt aufgrund seiner Weite dann alle Formteile bei ihrem Umlauf.

Darüber hinaus kann das Gehäuse in Fahrtrichtung vorne ein Schneepflugelement aufweisen, um Schnee aus der Fahrbahn zu drücken. Ein derartiges Schneepflugelement kann fest auf dem Gehäuse oder abnehmbar auf dem Gehäuse befestigt sein. Es vermindert die Menge an Schnee auf der Fahrbahn, sodass die Traktion verbessert wird.

Günstigerweise sind die Formteile starr. Dadurch können sie weniger leicht unter einem Rad herausgedrückt werden. Darüber hinaus ist es dann möglich, dass die Formteile unter dem Rad aneinanderstoßen sodass sie in der Fahrtrichtung einen Formschluss bilden, der ebenfalls die Stabilität der Gleitschutzvorrichtung erhöht.

Zudem können die Formteile Spikes oder quer zur Fahrtrichtung verlaufende Stege aufweisen. Damit wird die Reibung zwischen Formteil und Rad bzw. zwischen Formteil und Fahrzeuguntergrund erhöht.

Die Gleitschutzvorrichtung kann an dem Fahrzeug innen oder außen bezogen auf die Fahrspur eines Rads angebracht werden. Insbesondere kann sie direkt an der Radnabe außen oder am Unterboden des Fahrzeugs befestigt werden. Speziell bei Lastkraftwagen ist eine automatisch absenkbare Gleitschutzvorrichtung denkbar.

Besonders vorteilhaft ist außerdem, wenn sich die Gleitschutzvorrichtung in einer Gebrauchsstellung im Wesentlichen parallel zu dem Fahrzeuguntergrund erstreckt. Wenn sie sich dabei direkt auf dem Fahrzeuguntergrund abstützt, kann sie sämtliche Unebenheiten und damit verbundene vertikale Bewegungen des Rads mitvollziehen.

Die vorliegende Erfindung wird nun anhand der beigefügten Zeichnungen näher erläutert, in denen zeigen:
- Fig. 1: eine Draufsicht auf eine erfindungsgemäße Gleitschutzvorrichtung in der Montagestellung;
- Fig. 2: eine Draufsicht auf die Gleitschutzvorrichtung von Fig. 1 in der Arbeitsstellung;
- Fig. 3: eine Seitenansicht der Gleitschutzvorrichtung von Fig. 1;
- Fig. 4: eine Seitenansicht der Gleitschutzvorrichtung von Fig. 2;
- Fig. 5: eine Schrägansicht einer erfindungsgemäßen Gleitschutzvorrichtung,
- Fig. 6: einen Längsschnitt durch die Gleitschutzvorrichtung von Fig. 5;
- Fig. 7: eine Draufsicht auf eine endlose Kette von Formteilen, die unmittelbar miteinander verbunden sind; und
- Fig. 8: eine Seitenansicht der Formteilkette von Fig. 7.

Die nachfolgend näher geschilderten Ausführungsbeispiele stellen bevorzugte Ausführungsformen der vorliegenden Erfindung dar.

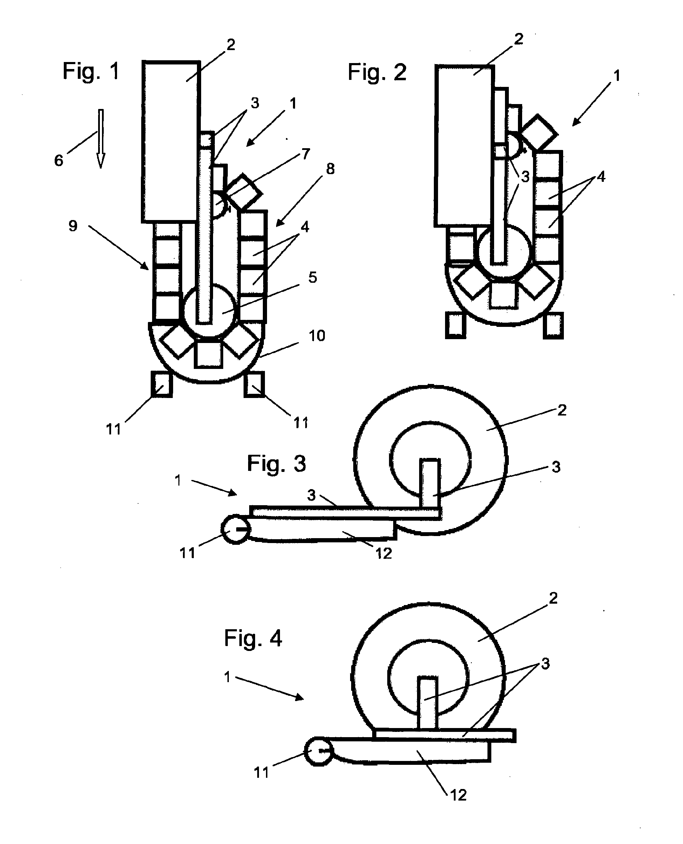

Die Draufsicht von Fig. 1 zeigt eine beispielhafte Gleitschutzvorrichtung 1 in einer Montagestellung an einem Rad 2 eines Fahrzeugs. Wie die Seitenansicht von Fig. 3 verdeutlicht, wird die Gleitschutzvorrichtung 1 mit Hilfe eines Befestigungssystems 3 beispielsweise direkt an der Nabe des Rads 2 befestigt.

Die Gleitschutzvorrichtung 1 besitzt eine Trägereinrichtung zum Halten bzw. Tragen von mehreren Formteilen 4. Hierzu besitzt die Trägereinrichtung eine in den Figuren der Übersicht halber nicht dargestellt umlaufende Kette, einen umlaufenden Riemen, ein umlaufendes Seil oder dergleichen. An der Kette, dem Riemen oder dem Seil sind die Formteile 4 befestigt. Die Kette, der Riemen oder das Seil werden mit Hilfe von Umlenkelementen 5, die ebenfalls Teil der Trägereinrichtung sind, umgelenkt. Eines der Umlenkelemente 5 befindet sich in Fahrtrichtung 6 vorne, während das andere Umlenkelement 6 in Fahrtrichtung hinter dem ersten Umlenkelement 5 angeordnet ist. Beim Umlauf laufen die Formteile 4 außen an der Kette, dem Riemen oder dem Seil. Zwischen den beiden Umlenkelementen 5, 7 verlaufen Abschnitte 8, 9 der Kette, des Riemens oder des Seils parallel zueinander.

In Fig. 1 ist außerdem ein Gehäuse der Gleitschutzvorrichtung angedeutet, das einen Frontabschnitt 10 aufweist, in dem die Formteile 4 an dem Umlenkelement 5 umgelenkt werden. An dem Frontabschnitt 10 sind hier Rollen 11 angebracht, mit denen die Gleitschutzvorrichtung 1 über den Untergrund rollen kann. In der Seitenansicht von Fig. 3 ist außerdem angedeutet, dass das Gehäuse einen seitlichen Abschnitt 12 aufweisen kann, der beispielsweise bis zu dem hinteren Umlenkelement 7 reichen kann. In diesem seitlichen Abschnitt werden die Formteile 4 während des Betriebs nach vorne zum Umlenkelement 5 transportiert.

In der Montagestellung von Fig. 1 ist das Rad 2 noch nicht auf die Formteile 4 gefahren. Um nun die Arbeitsstellung von Fig. 2 zu erreichen, fährt das Rad 2 auf die vor ihm liegenden Formteile 4, wodurch die Gleitschutzvorrichtung automatisch in die Arbeitsstellung von Fig. 2 gezogen wird. Die Arbeitsstellung von Fig. 2 ist in Fig. 4 in der Seitenansicht wiedergegeben. Das Rad 2 befindet sich dabei über der Gleitschutzvorrichtung 1.

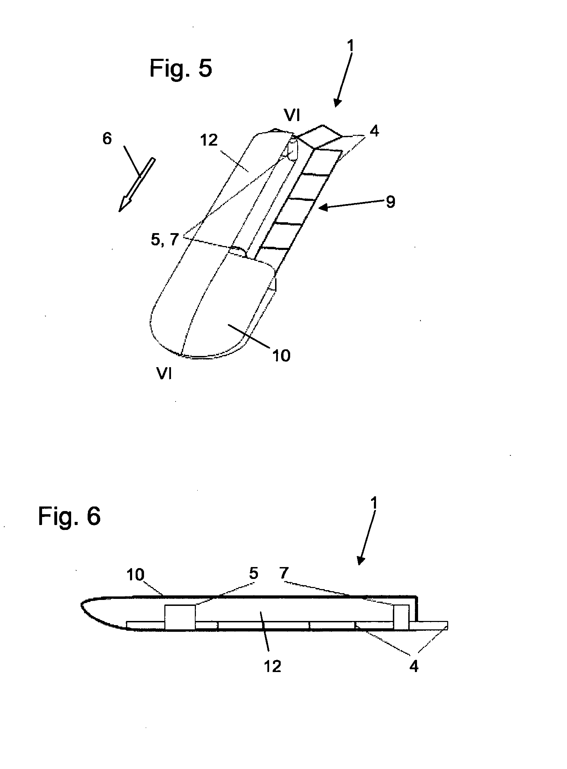

In Fig. 5 ist eine Ausführungsform einer Gleitschutzvorrichtung in Schrägansicht von vorne wiedergegeben. Das Rad des Fahrzeugs ist in dieser Figur nicht dargestellt. Das Gehäuse weist hier ebenfalls einen Frontabschnitt 10 und einen seitlichen Abschnitt 12 auf. Die Gehäuseabschnitte sind hier nach oben geschlossen. Der Schnee kann damit nicht in den Bereich des vorderen Umlenkelements 5 gelangen, in dem die Formteile 4 in die Fahrbahn geführt werden. Daher können sie bei dieser Bewegung auch keinen Schnee aufnehmen und diesen in die Fahrbahn transportieren.

Damit die Formteile 4 auch während ihres Transports nach vorne nicht Schnee oder dergleichen aufnehmen, laufen sie in dem in Fig. 5 nicht sichtbaren Abschnitt 8, der parallel zu dem Abschnitt 9 der Kette, des Riemens oder des Seils verläuft, in einem Gehäuseabschnitt, nämlich dem seitlichen Abschnitt 12. Damit verläuft etwas mehr als die Hälfte der Kette, des Riemens oder des Seils mit den daran befestigten Formteilen 4 innerhalb des Gehäuses 10, 12. Gegebenenfalls kann das Gehäuse auch um das hintere Umlenkelement 7 reichen. Wesentlich ist nur, dass der Abschnitt 9 der Kette frei bleibt, denn das Rad 2 fährt auf diesem Abschnitt.

In Fig. 6 ist ein Längsschnitt durch die Gleitschutzvorrichtung von Fig. 5 dargestellt. Aus dieser Figur ist insbesondere die kielförmige Gestalt des Frontabschnitts 10 des Gehäuses zu erkennen. Diese ermöglicht es, dass die Gleitschutzvorrichtung ohne großen Widerstand durch den Schnee gleitet und gegebenenfalls mit der nach oben gezogenen Nase auf dem Schnee aufschwimmt.

Die Umlenkelemente 5, 7 (z. B. Umlenkrollen oder Zahnräder) sind so gestaltet, dass die Formteile 4 zwischen der Lauffläche des Rads 2 und dem Untergrund zu liegen kommen. Durch die Bewegung der Trägereinrichtung in Fahrtrichtung 6 und die Fixierung der Formteile 4 zwischen Lauffläche und Untergrund durch das Fahrzeuggewicht wird eine umlaufende Bewegung des Formteilsystems erzeugt. Die Formteile 4 werden über den hinteren Umlenkpunkt 7 wieder nach vorne gezogen und über den vorderen Umlenkpunkt 5 vor die Lauffläche des Rads 2 gelegt. Hierbei gleiten die Formteile 4 über eine Fläche des Gehäuses 10, 12 mit guten Gleiteigenschaften (z. B. Kunststoff). Zudem ist dieser Bereich, in dem die Frontteile 4 nach vorne gezogen werden, mit dem Gehäuseabschnitt 12 verdeckt, damit die Formteile bei der Vorwärtsbewegung keinen Schmutz bzw. Eis und Schnee aufnehmen.

Um nach dem Gebrauch von der Arbeitsstellung wieder in die Montagestellung zu gelangen, muss das Rad 2 lediglich zurückbewegt werden. Dadurch wird das Trägersystem bzw. die Trägereinrichtung wieder freigegeben. Somit ist prinzipiell eine Bedienung vom Führerhaus aus möglich.

Nachfolgend werden einige Weiterbildungen beschrieben, die die erfindungsgemäße Gleitschutzvorrichtung optimieren können. Bereits angesprochen wurde, dass die Formteile 4 in einem schützenden Gehäuse (insbesondere seitlicher Abschnitt 12) zurück vor das Rad geführt werden. Dadurch werden beim Rücklauf weniger Schnee und andere Verschmutzungen aufgenommen, die sich in den Führungen und zwischen Formteilen 4 festsetzen können.

Bei geeigneter Gestaltung der Formteile haben diese eine ähnliche Wirkung wie Gleisketten. Bei entsprechender Größe der Formteile 4 kann das System auch als Traktionshilfe bei matschigem oder sandigem Untergrund verwendet werden.

Zudem ist es in der Regel wichtig, dass die Formteile sowohl einen guten Kraftschluss zur Lauffläche des Rads als auch zum Untergrund aufweisen. Dies kann beispielsweise mit auf beiden Auflageflächen eingearbeiteten Spikes oder querlaufenden Stegen, wie bei Raupenketten, erreicht werden.

Wie insbesondere bereits im Zusammenhang mit den Fig. 3 und 4 erläutert wurde, ist es günstig, wenn die Trägereinrichtung mit den Umlenkelementen 5, 7 und den umlaufenden Formteilen 4 verschiebbar mit dem Befestigungssystem 3 am Fahrzeug angebracht ist. Bewegt sich dann das Rad auf die Formteile, so verschiebt sich die Trägereinrichtung gegenüber dem Befestigungssystem 3 bis zu einem definierten Anschlag in die Arbeitsstellung. In dem Beispiel der Fig. 5 und 6 ist die Front des Gehäuses kielförmig geformt. Alternativ oder zusätzlich kann das Gehäuse auch Laufrollen aufweisen, wie bereits im Zusammenhang mit den Fig. 1 und 2 angedeutet wurde. Dadurch wird die Gefahr gemindert, dass die Gleitschutzvorrichtung beim Gleiten über den Untergrund sich mit diesem verhakt.

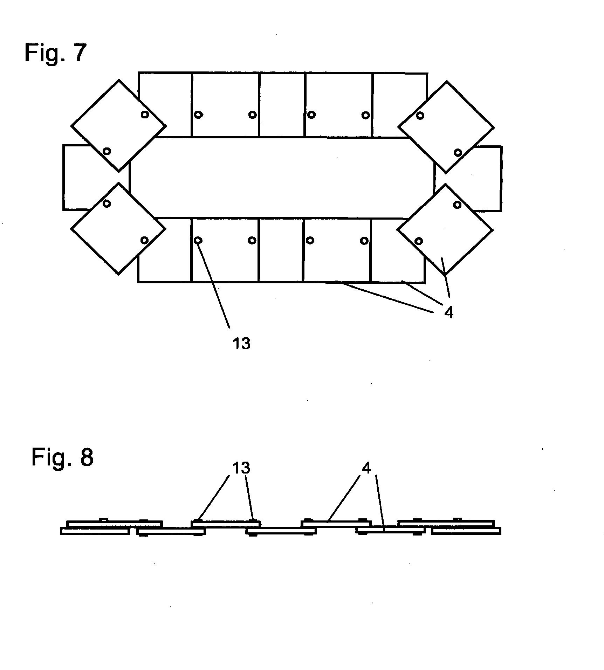

Entsprechend den Fig. 7 und 8 können die Formteile 4 direkt zu einer endlosen Kette zusammengefügt sein, wobei die Formteile die Kettenglieder bilden. Fig. 7 zeigt dies in der Draufsicht und Fig. 8 in der Seitenansicht. Jeweils benachbarte Formteile 4 sind mit Hilfe von Verbindungselementen 13 (z. B. Bolzen) miteinander drehbeweglich verbunden. Bei dieser Ausführungsform kann auf eine separate Kette oder einen separaten Riemen verzichtet werden, an der/dem die Formteile 4 befestigt sind.

Für Fahrten im tiefen Schnee kann an der Oberseite des Gehäuses ein Schneepflug (in den Figuren nicht dargestellt) angebracht werden. Damit lässt sich verhindern, dass Schnee über das Gehäuse zwischen Rad und Formteile gelangt und so die Haftung verschlechtert.

Die Anbringung der Gleitschutzvorrichtung am Fahrzeug kann speziell bei Lastkraftwagen fest sein. Dabei kann beispielsweise eine geeignete unter dem Fahrzeug angebrachte Mechanik die Trägereinrichtung vor den Reifen platzieren (Montagestellung; Arbeitsstellung). Bei Nichtgebrauch wird die Gleitschutzvorrichtung dann wieder nach oben unter das Fahrzeug gezogen. Dadurch ist eine Bedienung vom Führerhaus aus möglich.

Die Gleitschutzvorrichtung kann aber auch mobil ausgeführt sein und nur bei Bedarf an dem Fahrzeug befestigt werden. Bei einer derartigen mobilen Ausführung wird beispielsweise das Befestigungssystem über ein Wälzlager am Radmittelpunkt z. B. durch Spannhaken in den Felgenlöchern und einem Zentrierungsformstück über der Nabe mit dem Rad verbunden, sodass das Befestigungssystem die Bewegung der Achse bzw. Nabe mitvollzieht. Bei entsprechender Auslegung kann dieses System deshalb auch bei gelenkten Antriebsrädern verwendet werden.

Bei einer weiteren Ausführungsform ist das Befestigungssystem in der vertikalen Länge veränderlich gestaltet, sodass es für verschiedene Reifengrößen verwendet werden kann, und Unebenheiten des Untergrunds sowie unterschiedliche Beladungszustände des Fahrzeugs ausgeglichen werden.

Vorteilhaft bei der vorgestellten Gleitschutzvorrichtung ist insbesondere auch, dass diese horizontal angeordnet ist und nicht schräg wie viele derartige Systeme aus dem Stand der Technik. Schräge Anordnungen sind nämlich aufgrund des begrenzten Platzes unter dem Fahrzeug oftmals nicht möglich.

Ein weiterer Vorteil der erfindungsgemäßen Gleitschutzvorrichtung ist darin zu sehen, dass für das Rückwärtsfahren mit der Gleitschutzvorrichtung die Trägereinrichtung lediglich in der Arbeitsstellung durch eine Verriegelung (z. B. pneumatisch) fixiert werden muss.

## Patentansprüche

1. Gleitschutzvorrichtung für ein Fahrzeug mit
- einer Trägereinrichtung und
- mehreren Formteilen (4), die von der Trägereinrichtung entlang einer Fahrtrichtung (6) führbar und miteinander endlos verbunden sind, wobei
- die Trägereinrichtung zwei Umlenkelemente (5, 7) aufweist, an denen die verbundenen Formteile umgelenkt werden, und wobei
- die Trägereinrichtung an dem Fahrzeug so befestigbar ist, dass beim Fahren des Fahrzeugs die Formteile zwischen ein Rad (2) des Fahrzeugs und einen Fahrzeuguntergrund gezogen werden,
**dadurch gekennzeichnet, dass**
- an der Trägereinrichtung ein Gehäuse (10, 12) befestigt ist, das einen in Fahrtrichtung vorne befindlichen Abschnitt der Trägereinrichtung einschließlich der dort befindlichen Formteile schützt.

2. Gleitschutzvorrichtung nach Anspruch 1, wobei die Trägereinrichtung einen umlaufenden Riemen oder eine umlaufende Kette aufweist, an dem/der die Formteile befestigt sind

3. Gleitschutzvorrichtung nach Anspruch 1 oder 2, wobei die Formteile (4) auf mindestens der Hälfte des Weges bei ihrem Umlauf um die Umlenkelemente (5, 7) in dem Gehäuse (10, 12) geführt sind.

4. Gleitschutzvorrichtung nach einem der vorhergehenden Ansprüche, wobei das Gehäuse (10, 12) in Fahrtrichtung vorne einen Gleitabschnitt zum Gleiten über den Fahrzeuguntergrund oder an seiner Unterseite Rollen (11) oder Kufen aufweist.

5. Gleitschutzvorrichtung nach einem der vorhergehenden Ansprüche, wobei das Gehäuse (10, 12) breiter als die Trägereinrichtung einschließlich der daran befestigten Formteile (4) ist.

6. Gleitschutzvorrichtung nach einem der vorhergehenden Ansprüche, wobei das Gehäuse (10, 12) in Fahrtrichtung vorne ein Schneepflugelement aufweist, um Schnee aus der Fahrbahn zu drücken.

7. Gleitschutzvorrichtung nach einem der vorhergehenden Ansprüche, wobei die Formteile (4) starr sind.

8. Gleitschutzvorrichtung nach einem der vorhergehenden Ansprüche, wobei die Formteile (4) Spikes oder quer zur Fahrtrichtung verlaufende Stege aufweisen.

9. Fahrzeug mit einer Gleitschutzvorrichtung nach einem der vorhergehenden Ansprüche.

10. Fahrzeug nach Anspruch 9, wobei die Gleitschutzvorrichtung sich in einer Gebrauchsstellung im Wesentlichen parallel zu dem Fahrzeuguntergrund erstreckt.

## Claims

1. Antiskid device for a vehicle including
- a support device and
- several formed parts (4), which are guidable along a direction of travel (6) by the support device and endlessly connected to each other, wherein
- the support device has two deflection elements (5, 7), at which the connected formed parts are deflected, and wherein
- the support device is attachable to the vehicle such that the formed parts are pulled between a wheel (2) of the vehicle and a vehicle ground in driving the vehicle,
**characterized in that**
- a housing (10, 12) is attached to the support device, which protects a section of the support device located in front in direction of travel, including the formed parts located there.

2. Antiskid device according to claim 1, wherein the support device has a circumferential belt or a circumferential chain, to which the formed parts are attached.

3. Antiskid device according to claim 1 or 2, wherein the formed parts (4) are guided in the housing (10, 12) on at least half of the way in their circulation around the deflection elements (5, 7).

4. Antiskid device according to any one of the preceding claims, wherein the housing (10, 12) has a sliding section for sliding over the vehicle ground at the front in direction of travel or rollers (11) or skids on its bottom.

5. Antiskid device according to any one of the preceding claims, wherein the housing (10, 12) is wider than the support device including the formed parts (4) attached thereto.

6. Antiskid device according to any one of the preceding claims, wherein the housing (10, 12) has a snowplow element at the front in direction of travel in order to urge snow out of the roadway.

7. Antiskid device according to any one of the preceding claims, wherein the formed parts (4) are rigid.

8. Antiskid device according to any one of the preceding claims, wherein the formed parts (4) have spikes or webs extending transversely to the direction of travel.

9. Vehicle with an antiskid device according to any one of the preceding claims.

10. Vehicle according to claim 9, wherein the antiskid device extends substantially parallel to the vehicle ground in a use position.

## Revendications

1. Mécanisme anti-dérapage pour un véhicule avec
- un dispositif porteur et
- plusieurs pièces moulées (4), qui peuvent être guidées par le dispositif porteur le long d'un sens de circulation (6) et sont reliées en continu les unes avec les autres, moyennant quoi
- le dispositif porteur présente deux éléments de renvoi (5, 7), sur lesquels les pièces moulées reliées sont renvoyées et moyennant quoi
- le dispositif porteur peut être fixé sur le véhicule de telle sorte qu'en conduisant le véhicule, les pièces moulées sont tirées entre une roue (2) du véhicule et le sol sous le véhicule,
**caractérisé en ce que**
- sur le dispositif porteur, un boîtier (10, 12) est fixé, qui protège une section du dispositif porteur, qui se trouve à l'avant dans le sens de la circulation, y compris des pièces moulées qui s'y trouvent.

2. Mécanisme anti-dérapage selon la revendication 1, moyennant quoi le dispositif porteur présente une courroie rotative ou une chaîne rotative, sur laquelle sont fixées les pièces moulées.

3. Mécanisme anti-dérapage selon la revendication 1 ou 2, moyennant quoi les pièces moulées (4) sont guidées dans le boîtier (10, 12) sur au moins la moitié du parcours lors de leur rotation autour des éléments de renvoi (5, 7).

4. Mécanisme anti-dérapage selon l'une des revendications précédentes, moyennant quoi le boîtier (10, 12) présente à l'avant dans le sens de la circulation une section de glissement, destinée à glisser sur le sol sous le véhicule ou des rouleaux (11) ou des patins sur sa face inférieure.

5. Mécanisme anti-dérapage selon l'une des revendications précédentes, moyennant quoi le boîtier (10, 12) est plus large que le dispositif porteur, y compris les pièces moulées (4) qui y sont fixées.

6. Mécanisme anti-dérapage selon l'une des revendications précédentes, moyennant quoi le boîtier (10, 12) présente un élément chasse-neige à l'avant dans le sens de la circulation, pour pousser la neige hors de la chaussée.

7. Mécanisme anti-dérapage selon l'une des revendications précédentes, moyennant quoi les pièces moulées (4) sont rigides.

8. Mécanisme anti-dérapage selon l'une des revendications précédentes, moyennant quoi les pièces moulées (4) présentent des crampons ou des barres qui évoluent transversalement par rapport au sens de la circulation.

9. Véhicule avec un mécanisme anti-dérapage selon l'une des revendications précédentes.

10. Véhicule selon la revendication 9, moyennant quoi le mécanisme anti-dérapage s'étend en position d'utilisation essentiellement parallèlement au sol sous le véhicule
